# EUROPÄISCHE PATENTSCHRIFT

(11) **EP 3 009 733 B1**
(45) Veröffentlichungstag und Bekanntmachung des Hinweises auf die Patenterteilung: **17.02.2021**
(21) Anmeldenummer: 15188191.9
(22) Anmeldetag: 02.10.2015
(51) Int. Cl.: F21S 6/00, F21V 23/00, F21V 23/04, F21V 21/108, F21V 21/28, F21Y 105/10, F21Y 115/10, F24F 12/00, F24F 7/00, H05B 47/105, H05B 47/19

(54) **BEDIENMODUL UND BELEUCHTUNGSSYSTEM, MIT DRAHTLOSER KOMMUNIKATION**
OPERATING MODULE AND ILLUMINATION SYSTEM, HAVING WIRELESS COMMUNICATION
MODULE DE COMMANDE ET SYSTEME D'ECLAIRAGE, AVEC COMMUNICATION SANS FIL

(30) Priorität: 16.10.2014 DE 102014115085
(43) Veröffentlichungstag der Anmeldung: 20.04.2016
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- DE-A1-102010 045 194
- US-A1- 2007 152 977
- US-A1- 2011 051 437
- US-A1- 2012 113 645
- US-A1- 2013 026 947

## Beschreibung

Die Erfindung betrifft ein Bedienmodul zum Ansteuern von Leuchtmodulen eines Beleuchtungssystems. Weiterhin betrifft die Erfindung ein Beleuchtungssystem mit LED-Leuchtmodulen.

Bei herkömmlichen Büroleuchten werden die Lichtstärke, die Lichtfarbe bzw. die Farbtemperatur über einen Regler, beispielsweise einen Drehregler für die Lichtstärke und einen Drehregler für die Farbtemperatur, eingestellt. In der US 2011/0051437 A1 wird beispielsweise eine solche Büroleuchte erwähnt, welche einen Leuchtenkopf mit einem LED-Leuchtmodul sowie ein zur Ausrichtung des LED-Leuchtmoduls verstellbares Gehäuse aufweist. Hierzu weist die Lampe einen Leuchtenarm mit mehreren über Gelenke gekoppelten Segmenten auf, wobei in einem Segment zwei Bedienknöpfe zur Helligkeitseinstellung angeordnet sind.

Da sich einerseits die Intensität und das Spektrum des Tageslichts im Verlauf des Tages ändern und andererseits Menschen bei natürlichen, sich über den Tag ändernden Lichtverhältnissen optimal, d. h. besonders ermüdungsarm arbeiten möchten, ist es erstrebenswert auch die Bürobeleuchtung zum Beispiel je nach Tageszeit bzw. je nach natürlichem Hintergrundlicht variabel zu gestalten. Hierzu bieten sich über den Tag automatisiert veränderte Lichtspektren an, die jedoch komplexere und komfortablere Einstellungen des Lichts erfordern, als es bei herkömmlichen Leuchten der Fall ist.

Zur Einstellung solcher Büroleuchten, wäre es vorteilhaft, wenn auch die Bedienelemente komfortabler und flexibler ausgebildet sind. Die US 2007/0152977 A1 zeigt mehrere Varianten zur Ausgestaltung von Bedienelementen in Form von beleuchteten Touchpads. In einem Ausführungsbeispiel befindet sich hinter einer Abdeckscheibe eine Platine mit einer Sensorelektronik. Diese Platine weist Durchbrüche auf und hinter der Platine befindet sich eine weitere Platine mit einzelnen LEDs, welche durch die Löcher in der Platine für die Sensorelektronik hindurchstrahlen. Somit ist es möglich, Bereiche des Touchpads von hinten selektiv zu beleuchten. Allerdings kann es hier dazu kommen, dass die Anzeige durch Streulicht gestört wird. Aus dem Stand der Technik DE102010045194 A1, im Bereich der kapazitiven Tastfeld-Eingabevorrichtungen, sind Vorrichtungen mit ausgesparten Öffnungen bekannt, die es erlauben Leuchtelemente auf Abstand zur Benutzeroberfläche zu halten und dennoch das Licht der Leuchtelemente zur Benutzeroberfläche durch zu lassen.

Es ist eine Aufgabe der vorliegenden Erfindung, Beleuchtungssysteme mit einer komfortableren Bedienung zu entwickeln.

Diese Aufgabe wird durch ein Bedienmodul gemäß Patentanspruch 1 und durch ein Beleuchtungssystem gemäß Patentanspruch 6 gelöst.

Das erfindungsgemäße Bedienmodul zum Ansteuern von Leuchtmodulen eines Beleuchtungssystems umfasst eine außenseitige Abdeckscheibe mit zumindest teilweise durchscheinenden Anzeigeflächen und Bedienflächen. Anders ausgedrückt, sind die Anzeigeflächen und Bedienflächen zumindest in bestimmten Bereichen für sichtbares Licht transparent. Die Abdeckscheibe kann mit Symbolen bedruckt sein, die einzelne den Bedienflächen und Anzeigeflächen zugeordnete Funktionselemente repräsentieren. Die Abdeckscheibe kann zum Beispiel aus Glas, Acrylglas oder einem anderen transparenten Material bestehen.

Weiterhin weist das erfindungsgemäße Bedienmodul eine unter der Abdeckscheibe angeordnete Sensorelektronik-Schichtanordnung auf. In der gesamten Anmeldung sind übrigens die Richtungen "oben" und "unten" bzw. "darüber" und "darunter" oder "vor" und "hinter" auf eine Orientierung in bestimmungsgemäßer Gebrauchsanordnung bezogen. Insbesondere soll die Außenseite der Abdeckscheibe als nach "oben" und "vorne" gewandt betrachtet werden. Als Schichtanordnung kann jede flächige Anordnung mit mindestens einer Schicht verstanden werden. Vorzugsweise umfasst die Sensorelektronik-Schichtanordnung mehrere Schichten oder Ebenen mit Sensorflächen und elektronischen Bauelementen wie zum Beispiel SMD-Bausteinen.

Die Schichtanordnung weist auf der der Abdeckscheibe zugewandten Seite angeordnete Sensorelektrodenflächen auf. Weiterhin weist die Schichtanordnung Sensorelektronikbauelemente zur Ansteuerung der Sensorelektrodenflächen auf. Bevorzugt sind die Sensorelektronikbauelemente auf der von der Abdeckscheibe abgewandten Seite angeordnet. Dabei dienen die Sensorelektrodenflächen bzw. kapazitiven Elektroden der Realisierung kapazitiver Basissensoren als Bedienelemente des Bedienmoduls und die Sensorelektronikbauelemente der Realisierung von Sensoren bzw. Sensoransteuereinheiten für die kapazitiven Elektroden bzw. Sensorelektrodenflächen.

Die Sensorelektronik-Schichtanordnung umfasst zudem Lichtdurchbrüche, welche der Realisierung von Leuchtanzeigen dienen. Anders ausgedrückt, dienen die Lichtdurchbrüche dazu, dass Licht von der Rückseite des Bedienmoduls, d. h. der von der Abdeckscheibe abgewandten Seite des Bedienmoduls zu den auf der Abdeckscheibe des Bedienmoduls befindlichen Anzeigeflächen und Bedienflächen gelangen kann und so diese Flächen bzw. deren durchscheinende Teile bei Bedarf beleuchtet werden können.

Ferner umfasst das erfindungsgemäße Bedienmodul eine unter der Sensorelektronik-Schichtanordnung, d. h. auf der von der Abdeckscheibe wegweisenden Seite, angeordnete Halte- und Lichtkammereinheit mit Durchbrüchen, deren Positionen den Positionen der Lichtdurchbrüche auf der Sensorelektronik-Schichtanordnung entsprechen.

Schließlich weist das erfindungsgemäße Bedienmodul eine Anzahl von auf der von der Sensorelektronik-Schichtanordnung wegweisenden Seite der Lichtkammereinheit angeordneten Anzeige-LEDs auf, über die durch die Halte- und Lichtkammereinheit hindurch die durchscheinenden Anzeigeflächen auf der Abdeckscheibe beleuchtet werden. Bevorzugt sind dabei die Anzeige-LEDs auf einer auf der von der Sensorelektronik-Schichtanordnung wegweisenden Seite der Lichtkammereinheit angeordneten Anzeigeplatine angeordnet. Die Halte- und Lichtkammereinheit sorgt dabei beispielsweise für die Einhaltung eines definierten Abstands zwischen der Sensorelektronik-Schichtanordnung und den Anzeige-LEDs, insbesondere der Anzeigeplatine mit den Anzeige-LEDs, und umfasst dabei Lichtkammern, um jeweils das Licht der Anzeige-LEDs zu den Lichtdurchbrüchen der Sensorelektronik-Schichtanordnung zu führen. Mit dem erfindungsgemäßen Bedienmodul wird eine einfach herzustellende Anzeige- und Steuerungseinheit bereitgestellt, mit der eine komfortable Einstellung eines über den Tag automatisiert veränderten Lichtspektrums ermöglicht wird.

Das erfindungsgemäße Beleuchtungssystem, bevorzugt ein Bürobeleuchtungssystem, weist eine Leuchte mit zumindest einem LED-Leuchtmodul, das erfindungsgemäße Bedienmodul und ein zur Ausrichtung des zumindest einen LED-Leuchtmoduls verstellbares Gehäuse auf. Je nach Beleuchtungsanforderung kann insbesondere sowohl die Intensität und die Farbtemperatur des emittierten Lichts als auch die Ausrichtung der LED-Leuchtmodule mit Hilfe des erfindungsgemäßen Bedienmoduls eingestellt oder geändert werden.

Weitere, besonders vorteilhafte Ausgestaltungen und Weiterbildungen der Erfindung ergeben sich aus den abhängigen Ansprüchen sowie der nachfolgenden Beschreibung.

In einer besonders bevorzugten Variante weist das erfindungsgemäße Bedienmodul neben der Abdeckscheibe und der dahinter angeordneten Sensorelektronik-Schichtanordnung zumindest eine auf der Abdeckscheibe oder auf der Sensorelektronik-Schichtanordnung - vorzugsweise auf der der Abdeckscheibe zugewandten Seite der Sensorelektronik-Schichtanordnung angeordnete - Antenne für eine drahtlose, besonders bevorzugt kurzreichweitige Funkverbindung auf. Hierunter fallen zum einen Standards wie Bluetooth, WLAN, DECT oder WPAN-Protokolle wie ZigBee, besonders bevorzugt Funkverbindungen im Bereich von ca. 10 m oder darunter. Ebenso fallen hierunter aber auch sogenannte Nahfeldkommunikationsstandards, die eine Übertragung über kurze Strecken von wenigen Zentimetern ermöglichen. Die Antenne ist dementsprechend mit einer Sende-/Empfangselektronik (bzw. deren Bauelementen) z. B. mit einem Mikrocontroller verbunden oder in diese integriert, die gemäß dem jeweiligen Übertragungsstandard arbeiten kann. Da das Bedienmodul beispielsweise in einem stabilen Metallgehäuse untergebracht sein kann, ist es vorteilhaft, wenn die Antenne auf der der Abdeckscheibe zugewandten Seite der Sensorelektronik-Schichtanordnung oder der Abdeckscheibe selbst angebracht ist, um eine effektive Übertragung von Funkwellen zu ermöglichen, ohne dass die Antenne außen sichtbar ist. Daher ist diese Idee auch unabhängig vom speziellen erfindungsgemäßen weiteren Aufbau des Bedienmoduls sinnvoll. Ganz besonders bevorzugt ist die Verbindung mittels einer Bluetooth-Schnittstelle, da auch entsprechend geeignete Bluetooth-Module standardmäßig erhältlich sind, die z. B. in ein geräteseitiges Steuermodul der LED-Leuchte eingebaut werden.

Wenn die Sensorelektronik eine solche Schnittstelle mit einer kurzreichweitigen Funkverbindung aufweist, kann das Beleuchtungssystem anstatt über das Bedienmodul auch über ein mobiles Endgerät oder alternativ über einen PC, vorzugsweise per Bluetooth oder per WLAN oder einen anderen Funkstandard, bedient werden und/oder es ist eine Parametrierung des Beleuchtungssystems bzw. eines Leuchtmoduls des Beleuchtungssystems über das mobile Endgerät möglich. Dabei wird das mobile Endgerät als Fernsteuerung quasi zu einem Teil einer Steueranordnung des Beleuchtungssystems. Unter einem mobilen Endgerät ist hierbei jedes Gerät zu verstehen, welches der Benutzer mit sich tragen kann und welches geeignete Speichermittel und eine Benutzerschnittstelle aufweist sowie eine Schnittstelle zur Ankopplung an die Steuereinrichtung des Beleuchtungssystems. Hierunter fallen typische Handheld-Geräte, insbesondere mit geeigneten Funkschnittstellen oder dergleichen wie Smartphones, Tablet-PCs, Laptops, Uhren, Brillen etc. mit geeigneten Funktionen ähnlich wie Smartphones. Hierzu müssen das mobile Endgerät bzw. der PC nur eine geeignete Anwendungssoftware (im Folgenden auch wie allgemein üblich als "App" bezeichnet) aufweisen.

In einer besonders bevorzugten Ausgestaltung des erfindungsgemäßen Bedienmoduls weist die Sensorelektronik-Schichtanordnung eine unter der Abdeckscheibe flächig angeordnete Sensorelektronik-Platine auf. In einer alternativen Ausgestaltung des erfindungsgemäßen Bedienmoduls sind zumindest wesentliche Elemente der Sensorelektronik-Schichtanordnung, insbesondere die Sensorelektronik, oder alle Elemente auf der Rückseite der Abdeckscheibe angeordnet. Somit kann bei dieser speziellen Ausgestaltung die Abdeckscheibe als Platine für die Sensorelektronik und gegebenenfalls auch für die Kommunikationselektronik genutzt werden. Die benötigten Leiterverbindungen unter den Bausteinen können dabei zum Beispiel ein- oder mehrschichtig auf die Abdeckscheibe aufgedruckt sein und die Bauelemente können z. B. in SMD-Technik aufgebaut sein

Zudem kann die Sensorelektronik-Schichtanordnung Leistungselektronikelemente zum Betrieb von Beleuchtungs-LEDs umfassen. Die Leistungselektronik dient der Versorgung der Beleuchtungs-LEDs mit einer geeigneten Versorgungsspannung. Sie umfasst die Treiberschaltung, mit der die LEDs angesteuert und mit Strom versorgt werden.

In einer besonders praktikablen Ausgestaltung ist in das Bedienmodul zusätzlich mindestens eine USB-Schnittstelle integriert, die als Ladeschnittstelle und/oder als Datenkommunikationsschnittstelle ausgeführt ist. Über die USB-Schnittstelle lässt sich das Bedienmodul von einer externen Steuerungseinheit, beispielsweise einem mobilem Endgerät oder einem PC, ansteuern. Weiterhin lässt sich das mobile Endgerät über die USB-Schnittstelle mit elektrischer Energie aufladen.

In einer speziellen Ausgestaltung weist das Beleuchtungssystem eine Leuchte mit LED-Leuchtmodul, ein Bedienmodul und ein zur Ausrichtung der LED-Leuchtmodule verstellbares Gehäuse mit einem mehrfach abwinkelbaren Leuchtenarm auf. Dabei ist das Bedienmodul als ein Segment des Leuchtenarms ausgebildet und an zwei Stirnseiten über Gelenke mit benachbarten Segmenten gekoppelt, in die bevorzugt Kabelverbindungen für das Bedienmodul bzw. das LED-Leuchtmodul integriert sind. Eine derartige Integration des Bedienmoduls als ein Segment in den Leuchtenarm hat den Vorteil, dass der Benutzer sich das Bedienmodul (anders als z. B. bei einem festen Bedienmodul in einem Lampenfuß) gut in einer passenden Bedien- und Beobachtungsposition einstellen kann, anders z.B. als bei Leuchten, bei denen das Bedienmodul in einem Leuchtenfuß oder dergleichen angeordnet ist. Daher ist auch diese Idee unabhängig vom speziellen erfindungsgemäßen weiteren Aufbau des Bedienmoduls sinnvoll.

Vorzugsweise sind die Gelenke selbsthaltende Gelenke. Beispielsweise umfassen die Gelenke Federn, mit deren Rückstellkraft die Gelenke in Position gehalten werden. Bevorzugt ist mindestens ein Gelenk, alternativ beide Gelenke, mit dem Gehäuse des Bedienmoduls einteilig ausgebildet. Alternativ sind die Gelenke als Hülsen über den stirnseitigen Enden des Bedienmodulgehäuses oder noch alternativ als Stopfen in den stirnseitigen Enden des Bedienmodulgehäuses ausgebildet.

In einer bevorzugten Ausgestaltung des erfindungsgemäßen Beleuchtungssystems werden über das Bedienmodul verschiedene, vorzugsweise zumindest zwei, Leuchtmodule einer Leuchte betrieben. Dabei ist das erste Leuchtmodul vorzugsweise mit kaltweißen und warmweißen LEDs ausgestattet und wird für eine indirekte Beleuchtung der Decke und/oder des oberen Teils der Wände genutzt. Das zweite Leuchtmodul ist nach unten ausgerichtet und vorzugsweise mit kaltweißen, warmweißen oder mit neutralweißen LEDs ausgestattet und wird für eine direkte Beleuchtung des Arbeitsbereichs, vorzugsweise des Schreibtisches, genutzt. Der Nutzer kann vorzugsweise die aktuelle Lichttemperatur bzw. Farbtemperatur der Leuchtmodule einstellen oder die Lichttemperatur wird tageszeitabhängig gesteuert.

Zur Identifizierung oder zum Austausch von Informationen kann an der Leuchte des Beleuchtungssystems, vorzugsweise an dessen Bedienmodul, ein Nahfeldkommunikations-Element (NFC-Tag = Near Field Communication Tag = Nahfeldkommunikations-Tag), ein RFID-Etikett oder ein Scancode angebracht sein. Beispielsweise kann zur Parametrierung der Leuchte mittels eines mobilen Endgeräts oder eines PCs auf dem mobilen Endgerät bzw. dem PC bei Erkennen des Nahfeld-Kommunikations-Elements durch das Endgerät oder den PC ein Anwendungsprogramm, auch als App bezeichnet, aufgerufen und ausgeführt werden.

Die besagte App kann auf übliche Weise, beispielsweise aus dem Internet, auf das mobile Endgerät oder den PC heruntergeladen werden. Mit Hilfe dieser App ist es auch möglich, das Endgerät bzw. den PC über die drahtlose Schnittstelle mit der LED-Leuchte zu koppeln, beispielsweise indem in üblicher Weise ein Suchmodus eingestellt wird und gleichzeitig auch an der LED-Leuchte ein Suchmodus eingestellt wird und bei einem Auffinden der Geräte dann noch jeweils ein Bestätigungssignal in der App und/oder dem Bedienmodul der LED-Leuchte gegeben werden kann, um die Kopplung zu vollziehen. Weiterhin kann insbesondere auch über verschiedene Menüpunkte der App vorgegeben werden, was passiert, wenn ein gekoppeltes mobiles Endgerät aus dem Empfangsbereich der LED-Leuchte entfernt wird und was passiert, wenn dieses Endgerät dann wieder in den Empfangsbereich zurückkehrt. Beispielsweise könnte in einem Eco-Modus dafür gesorgt werden, dass bei Entfernung des Endgeräts aus dem Empfangsbereich der LED-Leuchte automatisch die Lampe abgeschaltet oder auf ein Minimum heruntergedimmt wird und automatisch eine Wiederaufnahme der Verbindung und ein Hochfahren der LED-Leuchte erfolgt, sobald sich das Endgerät wieder im Empfangsbereich befindet etc. Zum Beispiel kann hierzu die Information eines nicht vorhandenen Bluetooth-Signals, WLAN-Signals oder sonstigen Funksignals als Information zum Ausschalten oder Herunterdimmen der LED-Leuchte genutzt werden.

Weiterhin kann an dem Bedienmodul oder an einem anderen Element der Leuchte ein Bewegungs- oder Präsenzsensor angeordnet sein, wobei der Bewegungs- oder Präsenzsensor bei der Feststellung einer Präsenz eines Benutzers das Beleuchtungssystem anweist, die Helligkeit der LED-Leuchte in geeigneter Weise zu regeln und die LED-Leuchten beispielsweise abzuschalten, wenn mit Hilfe der genannten Sensoren ermittelt wird, dass sich keine Person im Bereich des Bürobeleuchtungssystems befindet.

Zur Steuerung des Beleuchtungssystems kann zudem in oder an dem Beleuchtungssystem, vorzugsweise dem Bedienmodul und/oder in oder an dem mobilen Endgerät, bevorzugt ein Helligkeitssensor angeordnet sein, über den die Helligkeit der LED-Leuchte umgebungslichtabhängig geregelt wird. Somit kann die Steuerung der LED-Leuchtmodule nicht nur von der Tageszeit abhängig gestaltet werden, sondern auch direkt unter Berücksichtigung des tatsächlich im Arbeitsbereich vorhandenen Tageslichts erfolgen.

Beispielsweise kann in dem Arbeitsbereich eine konstante Helligkeit erzielt werden, wobei die Helligkeit der LED-Leuchten je nach Intensität des Tageslichts variiert wird, so dass die Gesamtintensität des künstlichen und natürlichen Lichts immer gleich ist.

In einer vorteilhaften Ausgestaltung des erfindungsgemäßen Beleuchtungssystems umfasst zumindest ein Leuchtmodul wie erwähnt eine erste LED-Anordnung und eine zweite LED-Anordnung, wobei die erste LED-Anordnung und die zweite LED-Anordnung im Betrieb Licht mit unterschiedlichen Lichtspektren aussenden. Vorzugsweise sendet dabei die erste LED-Anordnung Licht mit einem höheren Blauanteil als die zweite LED-Anordnung aus. Die Anteile des von der ersten LED-Anordnung und der zweiten LED-Anordnung ausgesendeten Lichts werden erfindungsgemäß innerhalb eines Gesamtlichtspektrums der LED-Anordnungen gemäß einer vorgegebenen Spektrums-Steuerungsfunktion gesteuert. Bei dieser Spektrums-Steuerungsfunktion handelt es sich bevorzugt um eine zeitabhängige, insbesondere zirkadiane Spektrums-Steuerungskurve.

In einer speziellen Ausgestaltung des erfindungsgemäßen Beleuchtungssystems werden die erste LED-Anordnung und die zweite LED-Anordnung zur Erzeugung von Licht mit einem vorgegebenen Gesamtlichtspektrum, zum Beispiel warmweißes Licht, mit einem bestimmten Stromverhältnis angesteuert. Da die erste LED-Anordnung und die zweite LED-Anordnung Licht mit einem unterschiedlichen Spektrum ausstrahlen, lässt sich ein gewünschtes Spektrum des ausgestrahlten Lichts über die Intensitäten der Einzelspektren der ersten LED-Anordnung und der zweiten LED-Anordnung steuern. Anders ausgedrückt, wird die Farbtemperatur des von dem Beleuchtungssystem abgestrahlten Lichts jeweils über das Stromverhältnis eingestellt.

Die Erfindung wird im Folgenden unter Hinweis auf die beigefügten Figuren anhand von Ausführungsbeispielen noch einmal näher erläutert. Dabei sind in den verschiedenen Figuren gleiche oder ähnliche Komponenten mit identischen Bezugsziffern versehen. Es zeigen:
Figur 1 eine Seitenansicht eines Beleuchtungssystems gemäß einem Ausführungsbeispiel der Erfindung,
Figur 2 eine Seitenansicht eines Bedienmoduls gemäß einem Ausführungsbeispiel der Erfindung,
Figur 3 eine perspektivische Ansicht des in Figur 2 gezeigten Bedienmoduls,
Figur 4 eine perspektivische Explosionsansicht des in den Figuren 2 und 3 gezeigten Bedienmoduls,
Figur 5 eine Draufsicht auf eine Deckplatte eines Bedienmoduls gemäß einem Ausführungsbeispiel der Erfindung,
Figur 6 eine Draufsicht auf eine Sensorelektronik- und Kommunikationsplatine eines Bedienmoduls gemäß einem Ausführungsbeispiel der Erfindung,
Figur 7 eine perspektivische Ansicht auf die Unterseite einer Halte- und Lichtkammereinheit eines Bedienmoduls gemäß einem Ausführungsbeispiel der Erfindung und
Figur 8 ein Blockschaltbild, welches eine Steueranordnung eines Beleuchtungssystems gemäß einem Ausführungsbeispiel der Erfindung veranschaulicht.

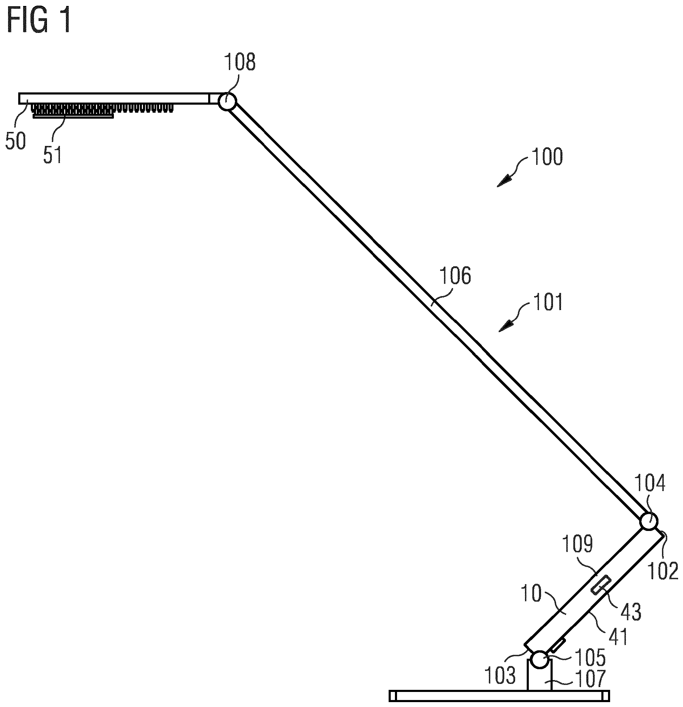

In Figur 1 ist ein Bürobeleuchtungssystem 100 gemäß einem Ausführungsbeispiel der Erfindung gezeigt. Das Bürobeleuchtungssystem 100 ist hier eine LED-Leuchte, die einen Leuchtkopf 50 umfasst, der ein Leuchtmodul 51 aufweist. Weiterhin weist die Leuchte 100 einen Leuchtenarm 101 auf, der den Leuchtenkopf stützt und untenseitig einen Leuchtenfuß107 aufweist. Das Leuchtmodul 51 ist für die direkte Beleuchtung des Arbeitsbereichs, beispielsweise eines Schreibtischs, ausgebildet. Für die direkte Beleuchtung ist das Leuchtmodul 51 nach unten hin ausgerichtet.

Das Leuchtmodul 51 kann verschiedene LED-Anordnungen zum Beispiel mit kaltweißen und warmweißen LEDs umfassen. Je nachdem, mit welcher Intensität bzw. mit welcher Stromstärke die einzelnen LEDs mit einem unterschiedlichen Spektrum betrieben werden, ergibt sich ein an bestimmte Anforderungen angepasstes Beleuchtungsspektrum. Die LED-Anordnungen sind im Leuchtmodul 51 auf eine LED-Platine, beispielsweise eine Metallkernplatine (nicht gezeigt), gelötet. Das Leuchtmodul 51 umfasst neben den auf der Platine angeordneten LEDs auch eine Reflektoranordnung, welche dafür sorgt, dass das Licht in einem bestimmten Abstrahlwinkel abgestrahlt wird, sowie eine Diffusoranordnung, beispielsweise hier in Form einer einfachen Milchglasscheibe oder dergleichen, welche das von den verschiedenen LEDs der LED-Anordnungen abgestrahlte Licht streut und so gut vermischt, dass eine damit beleuchtete Fläche gleichmäßig ausgeleuchtet wird. Außerdem weist das Leuchtmodul 51 auch noch geeignete Einrichtungen auf, wie beispielsweise Kühlrippen oder dergleichen, um für eine Abführung der überschüssigen Wärme zu sorgen.

Zur Steuerung der LED-Anordnungen und zum Einstellen, Anpassen und Ändern der Beleuchtungsintensität (Helligkeit) bzw. Gesamtleistung sowie der Farbtemperatur des insgesamt vom Leuchtmodul 51 abgegebenen Lichts weist die Leuchte 100 ein Steuermodul 41 auf, welches in einem unteren Bereich des Leuchtenarms 101 untergebracht ist und über Leitungen mit dem Leuchtmodul 51 verbunden ist. Dieses Steuermodul 41 ist gemeinsam mit einem Bedienmodul 10 in ein Segment des Leuchtenarms (101) integriert. Das Bedienmodul 10 kann per Hand von einem Benutzer durch Betasten einer Bedienfläche betätigt werden.

Der Leuchtenarm 101 der Leuchte ist in dem in Figur 1 gezeigten Ausführungsbeispiel dabei als abwinkelbarer Leuchtenarm mit einem ersten Armsegment 106 und einem zweiten Armsegment 109 ausgebildet, wobei das zweite Armsegment 109 bei diesem Ausführungsbeispiel durch das Bedienmodul 10 mit der Steuereinrichtung 41 bzw. dem Steuermodul 41 gebildet ist. Das zweite Armsegment 109 stützt sich mit seinem einen Ende auf einen Leuchtenfuß bzw. das Fußsegment 107 des Leuchtenarms 101 auf. An dem anderen, oberen Ende des Leuchtenarms 101 ist der Leuchtkopf 50 montiert. Mit der Verstellung des Leuchtenarms 101 kann die Position und Ausrichtung des Leuchtkopfes 50 und des Bedienmoduls 10 festgelegt werden. An den Enden der Armsegmente 106 und 109 sind jeweils Gelenke 104, 105 und 108 ausgebildet, über die die Armsegmente 106, 109 mit benachbarten Segmenten bzw. dem Leuchtkopf 50 und dem Leuchtenfuß 107 gekoppelt und um parallele, - in der dargestellten üblichen bestimmungsgemäßen Aufstellposition - horizontale Achsen verschwenkbar sind. In die Gelenke 104, 105, 108 der Armsegmente 106, 109 sind Kabelverbindungen für das Bedienmodul 10 bzw. das Leuchtmodul 51 integriert.

Die Gelenke 104, 105 und 108 können als selbsthaltende Gelenke ausgebildet sein. Beispielsweise umfassen die Gelenke Federn, mit deren Rückstellkraft die Gelenke in Position gehalten werden. Die Gelenke an den Stirnseiten 104 und 105 des Bedienmoduls 10 (mit der Steuereinrichtung 41), welches mit seinem Gehäuse das Armsegment 109 bildet, können zum Beispiel einteilig mit der Steuereinrichtung 41 ausgebildet sein. Alternativ sind die Gelenke 104, 105 als Hülsen über den stirnseitigen Enden des Gehäuses des Bedienmoduls 10 oder bevorzugt als Stopfen in den stirnseitigen Enden des Gehäuses des Bedienmoduls 10 ausgebildet.

Das Bedienmodul 10 mit der Steuereinrichtung 41 dient zum Einstellen, Anpassen und Ändern der Beleuchtung sowie der Position der Leuchte 100 bzw. des Leuchtkopfs 50. Das Bedienmodul 10 kann von einem Benutzer wie erwähnt durch Betasten einer Bedienfläche (nicht gezeigt) betätigt werden. Alternativ kann die Steuereinrichtung 41 auch über ein mobiles Endgerät, beispielsweise einen Laptop, ein Smartphone oder eine speziell für die Lampe eingerichtete Fernbedienung, oder einen PC betätigt werden. Die Steuereinrichtung 41 umfasst in der gezeigten Ausführungsform zusätzlich eine USB-Schnittstelle 43. Sie weist allerdings noch weitere Schnittstellen, zum Beispiel eine Funkschnittstelle zur Kommunikation mit einer externen Steuerungseinrichtung, wie zum Beispiel einem mobilen Endgerät, auf. Mit der USB-Schnittstelle kann ein Datenaustausch zwischen dem Bedienmodul 10 und der externen Steuerungseinrichtung vorgenommen werden. Zusätzlich kann über die USB-Schnittstelle die externe Steuerungseinrichtung, wenn sie ein mobiles Endgerät ist, mit elektrischer Energie aufgeladen werden.

Bei der in Figur 1 gezeigten Anordnung handelt es sich um ein relativ einfaches Ausführungsbeispiel mit nur einem Leuchtkopf 50, die LED-Leuchte könnte ebenso mehrere Leuchtköpfe aufweisen, beispielsweise als Stehlampe mit einem doppelten Leuchtkopf in verschiedene Richtungen nach unten. Ebenso ist es auch möglich, dass die Abstrahlrichtung vom Leuchtkopf nach oben geht, so dass die Lampe wie ein Deckenfluter wirkt oder zur Seite hin als Wallwasher. Weitere mögliche Varianten sind auch Lampen mit Leuchtköpfen, die wahlweise oder gleichzeitig in zwei verschiedene Richtungen abstrahlen, beispielsweise mit zwei Leuchtmodulen mit eigenen LED-Anordnungen, wobei eine nach unten leuchtet und die andere nach oben als Deckenfluter, und unterschiedlich oder in Kombination betrieben werden können.

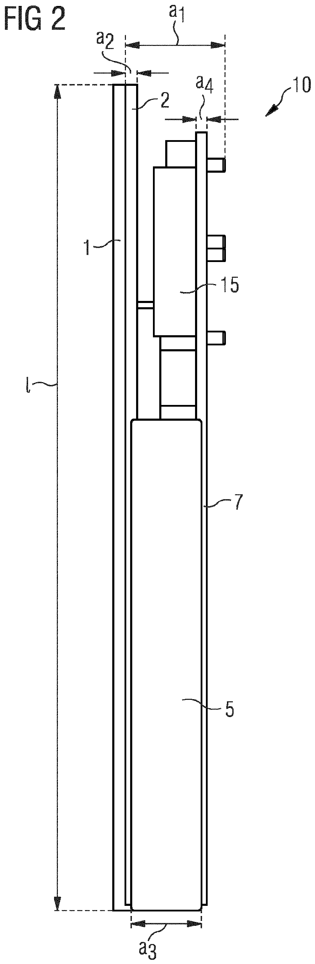

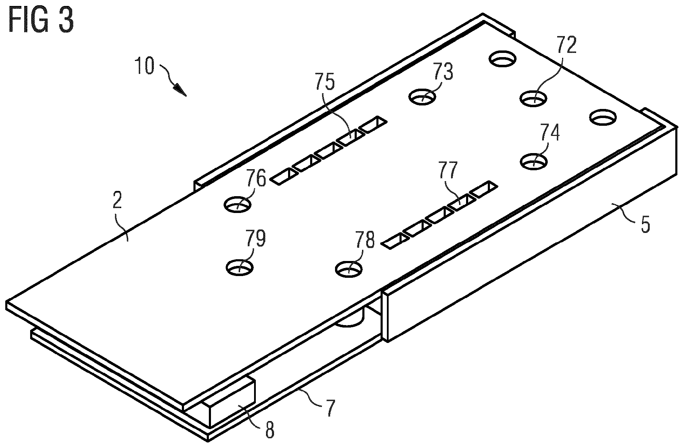

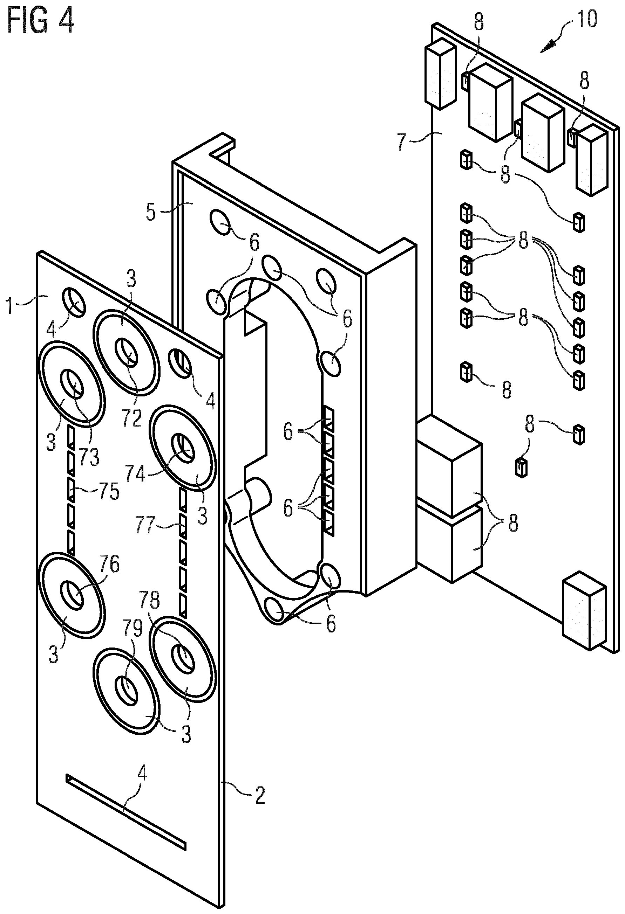

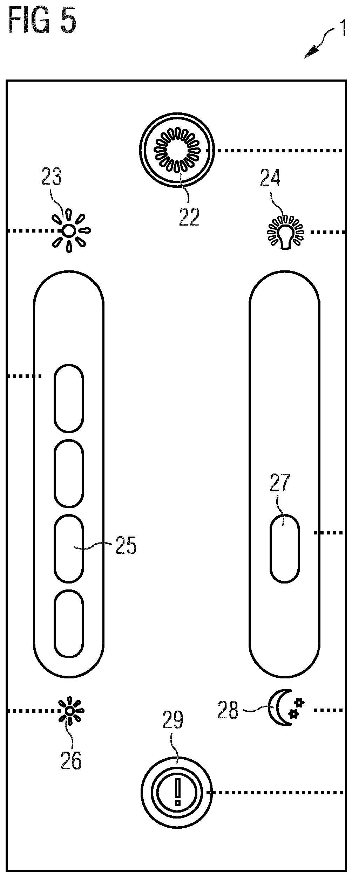

In den Figuren 2 bis 4 sind verschiedene detaillierte Ansichten des in Figur 1 gezeigten Bedienmoduls 10 veranschaulicht. In den Figuren 5 bis 8 sind einzelne Bauelemente des Bedienmoduls 10 im Detail dargestellt. In Figur 2 ist eine Seitenansicht des Bedienmoduls 10 gezeigt, in Figur 3 ist eine perspektivische Ansicht des Bedienmoduls gezeigt und in Figur 4 ist eine Explosionsansicht des Bedienmoduls 10 dargestellt.

Das in Figur 2 gezeigte Bedienmodul 10 hat hier eine Länge l von ca. 14,14 cm. Die Höhe a₁ des Bedienmoduls 10 beträgt ca. 1,64 cm.

Das Bedienmodul 10 umfasst eine bedruckte Abdeckscheibe 1 mit durchscheinenden Anzeigeflächen und Bedienflächen. Beispielsweise sind auf der Abdeckscheibe 1 (siehe Figur 5) bestimmte Bereiche als Bedienflächen für bestimmte Funktionen markiert und andere Bereiche als Anzeigeflächen für die Anzeige von bestimmten Informationen bezüglich des Betriebs und der Steuerung des Bürobeleuchtungssystems 100 eingezeichnet. Hierzu kann auf die Abdeckscheibe 1 z. B. eine Art Maske aus nicht durchscheinendem Material aufgedruckt sein, die genau die zu beleuchtenden Flächen und/oder Symbole ausspart. Die Bedienflächen umfassen einen Regler, mit dem die Helligkeit der Leuchte 100 stufenlos eingestellt werden kann. Weiterhin umfassen die Bedienflächen einen stufenlosen Regler, mit dem die Farbtemperatur bzw. der Blauanteil des von der Leuchte 100 abgestrahlten Lichts bzw. des Lichtspektrums des abgestrahlten Lichts stufenlos geregelt werden können. Die zugehörigen Anzeigeflächen geben jeweils Auskunft über die eingestellte Helligkeit bzw. über den Blauanteil des gewählten Lichtspektrums. Die Abdeckscheibe 1 kann zum Beispiel aus Glas oder einem anderen transparenten Material bestehen.

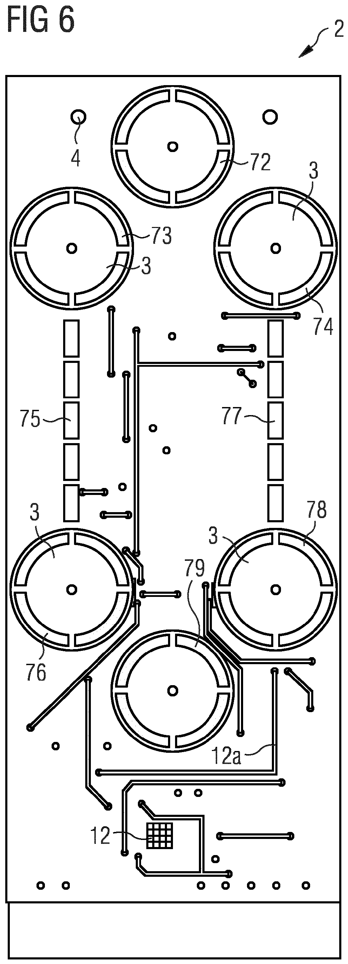

Unter der Abdeckscheibe 1 ist eine zweilagige Sensorelektronik- und Kommunikationsplatine 2 flächig angeordnet (siehe Figuren 4 und 6). Die Sensorelektronik- und Kommunikationsplatine stellt eine Art der Ausführung der Sensorelektronik-Schichtanordnung dar. Als zweilagig wird die genannte Platine 2 deswegen bezeichnet, weil sowohl auf der oberen, d. h. der zu der Abdeckscheibe 1 hin gewandten Seite als auch auf der von der Abdeckscheibe abgewandten Seite elektronische Bauelemente angeordnet sind. Auf der der Abdeckscheibe 1 zugewandten Seite der Sensorelektronik- und Kommunikationsplatine 2 sind Sensorelektrodenflächen 3 (siehe Figur 4) zur Realisierung kapazitiver Basissensoren bzw. kapazitiver Elektroden als Bedienelemente des Beleuchtungssystems 100 ausgebildet. Auf der von der Abdeckscheibe 1 abgewandten Seite der Sensorelektronik- und Kommunikationsplatine 2 sind Sensorelektronikbauelemente (siehe Figur 6) zur Ansteuerung der Sensorelektrodenflächen 3 zur Realisierung der Sensoren für die kapazitiven Elektroden angeordnet. In der Sensorelektronik- und Kommunikationsplatine 2 sind Lichtdurchbrüche 4 (siehe Figur 4) für die Realisierung von in den Anzeigebereichen und Bedienflächen der Abdeckscheibe 1 angeordneten Leuchtanzeigen ausgebildet. Diese Lichtdurchbrüche 4 sind in den Figuren 4 und 6 als kreisförmige, rechteckige oder linienförmige Ausnehmungen zu erkennen. Die Dicke a₂ der in Figur 2 gezeigten Sensorelektronik- und Kommunikationsplatine 2 beträgt hier ca. 1,7 mm.

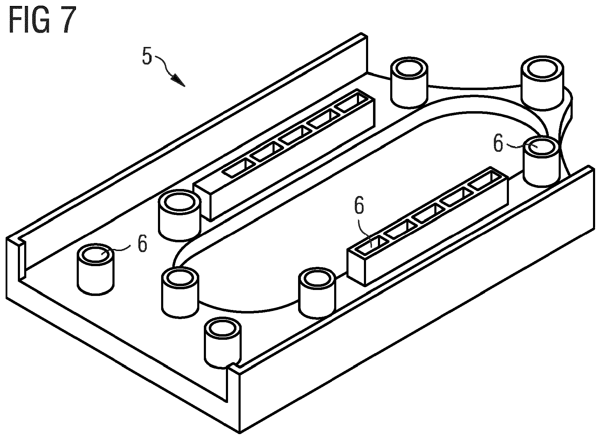

Unter der Sensorelektronik- und Kommunikationsplatine 2, d. h. auf der von der Abdeckscheibe 1 abgewandten Seite der Sensorelektronik- und Kommunikationsplatine 2, ist eine Halte- und Lichtkammereinheit 5 (siehe Figuren 2 bis 4 und Figur 7) angeordnet. Die Halte- und Lichtkammereinheit 5 umfasst Durchbrüche 6 (siehe Figur 7), deren Positionen den Positionen der Lichtdurchbrüche 4 auf der Sensorelektronik- und Kommunikationsplatine 2 entsprechen. Die Halte- und Lichtkammereinheit 5 dient der Fixierung der daran montierten Platinen 2, 7 sowie der Ausbildung eines Zwischenraums zwischen den Platinen 2, 7. Die Dicke a₃ der in Figur 2 gezeigten Halte- und Lichtkammereinheit 5 beträgt ca. 12 mm.

Unter der Halte- und Lichtkammereinheit 5, d. h. auf der von der Sensorelektronik- und Kommunikationsplatine 2 abgewandten Seite, ist eine Anzeigeplatine 7 mit Anzeige-LEDs 8 angeordnet. Mit den Anzeige-LEDs 8 werden durch die Durchbrüche 6 der Halte- und Lichtkammereinheit 5 hindurch, welche wie gegeneinander abgeschlossene Lichtkammern zur Führung des Lichts der Anzeige-LEDs 8 zu den zugeordneten Lichtdurchbrüchen 4 auf der Sensorelektronik- und Kommunikationsplatine 2 wirken, die durchscheinenden Anzeigeflächen auf der Abdeckscheibe 1 beleuchtet, um die jeweils gewählte Einstellung auf den Anzeigeflächen des Bedienmoduls anzuzeigen. Beispielsweise wird mit Hilfe der Anzeige-LEDs die Einstellung der mit den erwähnten stufenlosen Reglern gewählten Helligkeit der Leuchte 100 oder die Einstellung des mit Hilfe der erwähnten stufenlosen Regler gewählten Blauanteils des Spektrums des von der Leuchte 100 abgestrahlten Lichts angezeigt. Die Dicke a₄ der in Figur 2 gezeigten Anzeigeplatine 7 beträgt hier ebenfalls ca. 1,7 mm. Die Halte- und Lichtkammereinheit 5 sorgt für einen ausreichenden Abstand der elektronischen Bauteile und Beleuchtungselemente der Anzeigeplatine 7 von der Sensorelektronik- und Kommunikationsplatine 2, so dass die beiden Platinen 2, 7 gegen mechanische, elektrische und thermische Störungen bzw. Belastungen ausreichend geschützt sind. Wie in Figur 2 zu erkennen ist, ist auf der Anzeigeplatine 7 eine USB-Schnittstelle 15 zur Kommunikation von äußeren Steuereinheiten mit dem Bedienmodul 10 angeordnet.

In den Figuren 5 bis 7 sind die einzelnen Bauelemente des in den Figuren 2 bis 4 gezeigten Bedienmoduls detailliert veranschaulicht.

Figur 5 zeigt die Abdeckscheibe 1 des in den Figuren 2 bis 4 gezeigten Bedienmoduls 10. Auf der Abdeckscheibe 1 sind verschiedene Anzeigebereiche 25, 27 und Bedienbereiche 22, 23, 24, 26, 28 und 29 markiert. Die Markierungen auf der Abdeckscheibe 1 können zum Beispiel durch ein Druckverfahren aufgebracht sein.

Die in Figur 5 als oberste Taste eingezeichnete Taste 22 kann zum Beispiel als Umschalttaste und/oder als Boost-Taste ausgebildet sein. Die Taste 22 ist durch kleine in radialer Richtung verlaufende Fensterflächen gekennzeichnet, welche zusammen einen Kreis bilden. Unter der Taste 22 befindet sich eine Sensorelektrodenfläche 3 (siehe Figur 6, Sensorelektrodenfläche 3 bei Durchbruch 72). Nähert sich ein Finger eines Benutzers dieser Sensorelektrodenfläche 3, wird eine Änderung der Sensorkapazität detektiert. Wird also die Umschalt- oder Boost-Taste 22 durch Annäherung betätigt, so leuchtet eine unter der Umschalt- oder Boost-Taste 22 auf der Anzeigeplatine 7 angeordnete LED auf, so dass der von der Umschalt- oder Boost-Taste 22 auf der Abdeckscheibe 1 eingenommene Bereich bzw. die in radialer Richtung verlaufenden Fensterflächen erleuchtet werden. Beispielsweise kann bei einer kurzen Annäherung an die Taste 22 eine Umschaltfunktion und bei einer längeren Annäherung an die Taste 22 eine Boost-Funktion ausgeführt werden. Im Fall einer Boost-Funktion wird mit dem Auslösen der Boost-Funktion z. B. die Leuchtintensität und/oder die Farbtemperatur auf einen vorbestimmten Maximalwert erhöht. Ein erneutes Drücken der Boost-Taste 22 oder einer für die Einstellung der Intensität bzw. des Spektrums der Leuchte zur Verfügung stehenden Taste bewirkt das Abstellen der Boost-Funktion. Ist die Leuchte 100 als Leuchte mit zwei Leuchtköpfen und/oder Leuchtmodulen ausgebildet, wobei z. B. ein erstes Leuchtmodul / erster Leuchtkopf für die direkte Beleuchtung des Arbeitsplatzes und ein zweites Leuchtmodul / zweiter Leuchtkopf für die indirekte Beleuchtung eingesetzt werden, so kann mit Hilfe der Umschaltfunktion der Umschalt- oder Boost-Taste zwischen der Ansteuerung des ersten Leuchtmoduls / Leuchtkopfes und des zweiten Leuchtmoduls / Leuchtkopfes hin- und hergeschaltet werden. Auf diese Weise können die Bedienfelder 23, 26, 24, 28 zur individuellen Einstellung der Helligkeit und der Farbtemperatur des von dem ersten Leuchtmodul / Leuchtkopf und dem zweiten Leuchtmodul / Leuchtkopf emittierten Lichtes verwendet werden. Bei dieser Ausführungsform ist zum Beispiel links und rechts von der Umschalt-Taste 22 jeweils eine weitere Anzeigefläche ausgebildet, welche anzeigt, ob aktuell das erste Leuchtmodul / der erste Leuchtkopf oder das zweite Leuchtmodul / der zweite Leuchtkopf angesteuert werden.

Die Abdeckscheibe 1 umfasst weiterhin zwei mit radialen strahlenförmigen Fensterflächen umgebene kreisförmige Bedienelemente 23, 26 bzw. Bedienflächen zur Einstellung der Helligkeit der Leuchte 100. Sie stellen also eine Art Dimm-Funktion zur Verfügung. Die Bedienelemente 23, 26 funktionieren ebenfalls als Näherungssensortasten. Unter den Bedienelementen 23, 26 sind ebenfalls Sensorelektroden 3 angeordnet (siehe Figur 6, Sensorelektroden 3 bei den Durchbrüchen 73 und 76), deren Kapazitätsänderung bei Annäherung zu einem Schaltsignal führt. Weiterhin sind auch unter den Bedienelementen 23, 26 für die Einstellung der Helligkeit Leuchtdioden angeordnet, welche beispielsweise bei einer Annäherung an die genannten Bedienelemente aufleuchten. Wird zum Beispiel das erste Bedienelement 23 zur Einstellung der Helligkeit durch Annäherung, beispielsweise mit einem Benutzerfinger, betätigt, so wird die Helligkeit der Leuchte 100 so lange erhöht, bis sich entweder der Benutzerfinger von der Bedienfläche 23 entfernt und damit die Kapazität der der Bedienfläche 23 zugeordneten Sensorelektrode 3 wieder ihren ursprünglichen Wert annimmt, den sie vor der Annäherung hatte, oder ein vorbestimmter Maximalwert der Beleuchtungsintensität erreicht ist. Wird zum Beispiel das zweite Bedienelement 26 zur Einstellung der Helligkeit betätigt, so wird die Helligkeit der Leuchte 100 so lange reduziert, bis sich entweder der Benutzerfinger von der Bedienfläche 26 entfernt und damit die Kapazität der der Bedienfläche 26 zugeordneten Sensorelektrode 3 wieder ihren ursprünglichen Wert annimmt, den sie vor der Annäherung hatte, oder ein vorbestimmter Minimalwert der Beleuchtungsintensität, beispielsweise Null Watt/m², erreicht ist. Die aktuelle Beleuchtungsintensität wird mit fünf kleinen länglichen Fensterflächen 25 angezeigt, die zwischen den beiden Bedienelementen 23, 26 zur Einstellung der Helligkeit angeordnet sind. Beispielsweise ist die gewählte Helligkeit zu der Anzahl der beleuchteten länglichen Fensterflächen 25 (in Figur 5 sind es aktuell vier helle Fensterflächen) proportional.

Weiterhin sind den Bedienelementen 23, 26 zur Einstellung der Helligkeit gegenüberliegend zwei Bedienflächen 24, 28 zur Einstellung der Farbtemperatur der Leuchte 100 angeordnet. Ein erstes Bedienelement 24 zur Einstellung der Farbtemperatur, welches in Figur 5 auch mit einem Sonnensymbol gekennzeichnet ist, dient der Erhöhung des Blauanteils des Spektrums der Leuchte 100, was allgemein aktivierend auf den Benutzer wirkt. Ein zweites Bedienelement 28 zur Einstellung der Farbtemperatur der Leuchte 100, welches in Figur 5 mit einem Mondsymbol gekennzeichnet ist, dient der Reduktion des Blauanteils des Spektrums der Leuchte 100, was allgemein beruhigend auf den Benutzer wirkt. Zwischen den beiden Bedienelementen 24, 28 zur Einstellung der Farbtemperatur der Leuchte 100 ist eine Anzeige 27 mit fünf Fensterflächen zur Darstellung der aktuellen Farbtemperatur ausgebildet. Beispielsweise sind unter den die Anzeige 27 darstellenden Durchbrüchen LEDs auf der Anzeigeplatine 7 ausgebildet, wobei eine LED zur Anzeige der aktuellen Farbtemperatur aufleuchtet, deren Position der aktuellen Farbtemperatur entspricht. Beispielsweise bedeutet ein Aufleuchten einer zu dem ersten Bedienelement 24 zur Einstellung der Farbtemperatur hin angeordneten LED eine hohe Farbtemperatur des von der Leuchte 100 emittierten Lichtes. Andererseits bedeutet ein Aufleuchten einer zu dem zweiten Bedienelement 28 zur Einstellung der Farbtemperatur hin angeordneten LED eine niedrige Farbtemperatur des von der Leuchte 100 emittierten Lichtes. Wird zum Beispiel das erste Bedienelement 24 zur Einstellung der Farbtemperatur betätigt, so wandert das beleuchtete Feld der Anzeige 27 zur Darstellung der aktuellen Farbtemperatur in Richtung des ersten Bedienelements 24 zur Einstellung der Farbtemperatur, wobei sich die Farbtemperatur des von der Leuchte 100 emittierten Lichts der Änderung der Anzeige 27 entsprechend erhöht. Wird das zweite Bedienelement 28 zur Einstellung der Farbtemperatur betätigt, so wandert das beleuchtete Feld der Anzeige 27 zur Darstellung der aktuellen Farbtemperatur in Richtung des zweiten Bedienelements 28 zur Einstellung der Farbtemperatur, wobei die Farbtemperatur des von der Leuchte 100 emittierten Lichts der Änderung der Anzeige 27 entsprechend reduziert wird.

Zusätzlich ist auf der Anzeigescheibe 1 eine Bedienfläche 29 angeordnet, die als ein von einem Kreis umschlossener, vertikaler Strich ausgebildet ist. Diese Bedienfläche dient dem Ein- und Ausschalten der Leuchte 50 bzw. des Bedienfeldes des Bedienmoduls 10. Auch unter diesem Bereich befindet sich eine LED, welche den Betriebszustand der Leuchte 50 bzw. des Bedienmoduls 10 anzeigt.

In Figur 6 ist die Sensorelektronik- und Kommunikationsplatine 2 des in den Figuren 2 bis 4 gezeigten Bedienmoduls 10 gezeigt. Die in Figur 6 gezeigte Sensorelektronik- und Kommunikationsplatine 2 umfasst kreisförmige und rechteckige Durchbrüche 72, 73, 74, 75, 76, 77, 78, 79, welche an zu den Positionen der Bedienflächen 22, 23, 24, 26, 28, 29 und Anzeigeflächen 25, 27 der Abdeckscheibe 1 korrespondierenden Positionen angeordnet sind. Auf diese Weise können die Bedienflächen und Anzeigeflächen der Abdeckscheibe 1 von Leuchtelementen beleuchtet werden, die sich auf der von der Abdeckscheibe abgewandten Seite der Sensorelektronik- und Kommunikationsplatine 2 befinden. Die kreisförmigen Durchbrüche 72, 73, 74, 76, 78, 79 entsprechen zum Beispiel den auf der Abdeckscheibe 1 markierten Bedienelementen 22, 23, 24, 26, 28, 29, während die rechteckigen Durchbrüche 45, 47 den auf der Abdeckscheibe 1 eingezeichneten Anzeigeelementen 25, 27 entsprechen. Weiterhin sind auf der Sensorelektronik- und Kommunikationsplatine 2 kreisförmige Elektrodenflächen 3 angeordnet, die als kapazitive Elektroden für einen Näherungssensor ausgebildet sind. Die kreisförmigen Elektrodenflächen 3 sind an zu Positionen der Bedienelemente 22, 23, 24, 26, 28, 29 und Anzeigeelemente 25, 27 auf der Abdeckscheibe 1 korrespondierenden Positionen angeordnet. Auf der von der Abdeckscheibe 1 abgewandten Seite der Sensorelektronik- und Kommunikationsplatine 2 ist ein Mikrokontroller 12 angeordnet, mit dem eine Ansteuerung der kreisförmigen Elektroden 3 durchführbar ist. Die Sensor- und Steuersignale werden zwischen dem Mikrokontroller 12 und den Sensorelektroden 3 über Signalleitungen 12a übertragen.

In Figur 7 ist die Halte- und Lichtkammereinheit 5 des in den Figuren 2 bis 4 gezeigten Bedienmoduls 10 in einer perspektivischen Ansicht von unten gezeigt. Die Halte- und Lichtkammereinheit 5 bildet einen Hohlraum, wobei die Deckfläche der Halte-und Lichtkammereinheit 5 an den Positionen der Durchbrüche 72, 73, 74, 75, 76, 77, 78, 79 der Sensorelektronik- und Kommunikationsplatine 2 ausgebildete Durchbrüche 6 aufweist, die vorsprungartig in vertikaler Richtung fortgesetzt werden, so dass das durch die Durchbrüche 6 und weiter durch die Durchbrüche 72, 73, 74, 75, 76, 77, 78, 79 hindurchfallende Licht nur von direkt unter den Durchbrüchen 6 angeordneten Leuchtelementen und nicht von dazu benachbarten Leuchtelementen 8 (siehe Figur 4) herrührt. Auf diese Weise werden die Anzeigefelder 25, 27 und Bedienfelder 22, 23, 24, 26, 28, 29 auf der Abdeckscheibe 1 jeweils ausschließlich von den ihnen jeweils zugeordneten Leuchtelementen 8 beleuchtet, so dass eine eindeutige Zuordnung zwischen den einzelnen Leuchtelementen 8 und den einzelnen Anzeigefeldern 25, 27 und Bedienfeldern 22, 23, 24, 26, 28, 29 gewährleistet ist. Anschaulich ausgedrückt, bilden die Durchbrüche 6 separate Lichtkammern, denen jeweils ein bestimmtes Leuchtelement 8 und ein bestimmtes Anzeigefeld 25, 27 oder Bedienfeld 22, 23, 24, 26, 28, 29 zugeordnet ist und die Störungen der Anzeige von Informationen durch Streulicht verhindern.

Auf der Anzeigeplatine 7 sind Anzeige-Leuchtelemente 8, zum Beispiel Anzeige-LEDs, angeordnet, die zu den Positionen der Durchbrüche 6 der Halte-und Lichtkammereinheit 5 bzw. der Durchbrüche 72, 73, 74, 75, 76, 77, 78, 79 der Sensorelektronik- und Kommunikationsplatine 2 und der Anzeigeflächen und Bedienflächen der Abdeckscheibe 1 korrespondierend positioniert sind (siehe Figur 4). Weiterhin ist auf der Anzeigeplatine 7 ein USB-Schnittstellenmodul zur Kommunikation des Bedienmoduls mit externen Einrichtungen, wie zum Beispiel mobilen Endgeräten oder einem PC, angeordnet.

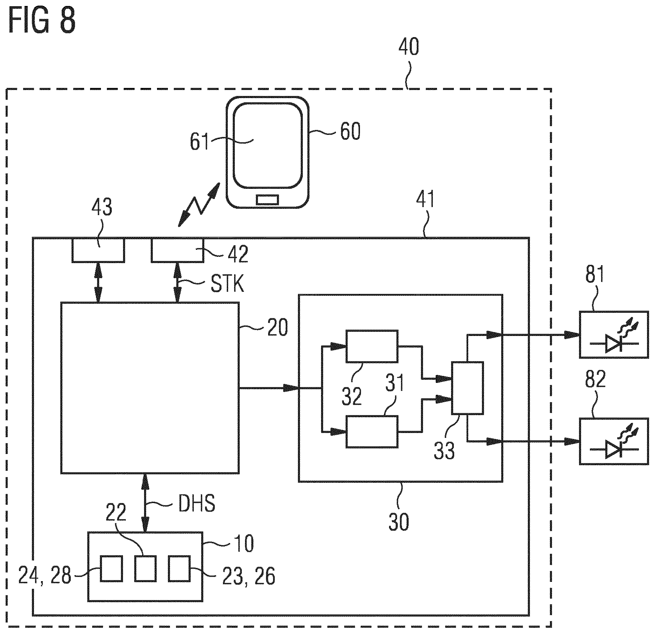

Figur 8 zeigt eine Steueranordnung 40 für eine LED-Leuchte 100. Hier sind die beiden LED-Anordnungen 81, 82 nur symbolisch mit einer LED dargestellt. Es kann sich wie erläutert hierbei aber auch um mehrere LEDs handeln, wie z. B. zu Figur 1 erläutert. Die Steueranordnung 40 umfasst eine auf Seiten der LED-Leuchte 100 angeordnete Steuereinrichtung 41, beispielsweise hier in Form des Steuermoduls 41, welches im unteren Teil des Arms 101 der LED-Leuchte 100 angeordnet ist (siehe Figur 1). Dieses Steuermodul 41 ist, wie schon erwähnt, mit bzw. in einem Bedienmodul 10 mit mehreren Bedienelementen 22, 23, 24, 26, 28, 29 hier vorzugsweise in Form von kapazitiv auf Berührung wirkenden "Tasten" integriert, d. h. es bildet mit diesem eine gemeinsame Baugruppe in einem gemeinsamen Gehäuse.

Neben diesem Bedienmodul 10 bzw. dieser direkt an der LED-Leuchte 100 angeordneten Benutzerschnittstelle gibt es weitere Schnittstellen 42, 43 zur direkten oder indirekten Kopplung mit einem mobilen Endgerät 60 und/oder einem externen Speicher (nicht dargestellt). Bei der einen Schnittstelle 43 handelt es sich um eine Steckerschnittstelle 43, beispielsweise eine USB-Schnittstelle 43, um das mobile Endgerät oder einen USB-Speicher oder dergleichen mit dem Steuermodul 41 zu verbinden und/oder als Ladeschnittstelle zum Aufladen eines mobilen Endgeräts. Bei der anderen Schnittstelle 42 handelt es sich um eine drahtlose Schnittstelle 42, vorzugsweise im kurzreichweitigen Funkbereich, hier konkret um eine bevorzugte Bluetooth-Schnittstelle 42. Auch über diese drahtlose Schnittstelle 42 kann ein mobiles Endgerät 60 mit einer grafischen Benutzerschnittstelle 61, vorzugsweise ein Smartphone, eine Uhr mit entsprechender Funktion oder dergleichen, mit der LED-Leuchte 100 gekoppelt werden. Das mobile Endgerät 60 bildet dann als Fernsteuerung einen Teil der Steueranordnung 40. Auf diesem mobilen Endgerät 60 ist hierzu eine App implementiert, die eine Steuerfunktionalität für die LED-Leuchte 100 bietet. Beispielsweise können hiermit Intensitätswerte oder Farbtemperaturwerte erzeugt oder eine Spektrums-Steuerungskurve ermittelt werden und diesen Werten entsprechende Daten zur Steuerung der LED-Anordnungen 81, 82 an das Steuermodul 41 übertragen werden.

Ein weiterer Baustein des Steuermoduls 41 ist ein Mikrocontroller 20, welcher hier eine LED-Stromsteuerung 30 des Steuermodul 41 ansteuert, über die wiederum die LED-Anordnungen 81, 82 beispielsweise in einem Pulsweitenmodulationsverfahren angesteuert bzw. bestromt werden. Beispielsweise kann die LED-Stromsteuerung 30 eine Einrichtung 31 zur Gesamtstromsteuerung für beide LED-Anordnungen 81, 82 umfassen und eine Einrichtung 32 zur Bestromungsauswahl, d. h. welcher Anteil des Gesamtstroms welcher der LED-Anordnungen 81, 82 zur Verfügung gestellt wird. Über einen Stromschalter 33 wird dann der Gesamtstrom entsprechend phasenweise aufgeteilt.

Der Gesamtstrom und der Anteil des Gesamtstroms für die einzelnen LED-Anordnungen 81, 82 wird letztlich vom Mikrocontroller 20 vorgegeben, der die LED-Stromsteuerung 30 ansteuert. Beispielsweise wird dem Mikrocontroller 20 eine Spektrums-Steuerungsfunktion STK, hier in Form einer zeitabhängigen, insbesondere zirkadianen, Spektrums-Steuerungskurve STK vorgegeben, nach der die Farbtemperatur passend zum Tagesverlauf des Nutzers automatisch geändert wird. Sofern der Benutzer eine solche Funktion mit einer Spektrums-Steuerungskurve STK deaktiviert hat, kann als Spektrums-Steuerungsfunktion auch ein konstant eingestellter Wert dem Mikrocontroller vorgegeben werden (d. h. eine zeitkonstante Funktion), wobei der Wert so lange gilt, bis der Benutzer wieder über eine Taste zur Einstellung der Farbtemperatur, beispielsweise mit der oben beschriebenen Tastenanordnung 24, 28 zur Farbtemperaturreglung auf dem Bedienmodul 10 (in Figur 9 nur mit einer Taste symbolisiert) oder einem entsprechenden virtuellen Einstellregler auf der grafischen Benutzerschnittstelle 61 der App des mobilen Endgeräts 60, einen neuen Wert vorgibt. Dies hängt davon ab, welche Funktion der Benutzer eingestellt hat.

Das Dimmen, d. h. das Einstellen der Helligkeit bzw. der Gesamtleistung (letztlich hier der Gesamtstrom), der LED-Anordnungen 81, 82 erfolgt über die oben beschriebene Dimm-Tastenanordnung 23, 26 (in Figur 9 symbolisiert durch nur eine Dimm-Taste) auf dem Bedienmodul 10 oder eine entsprechende Funktionalität auf dem mobilen Endgerät 60. Diese Einstellung der Gesamthelligkeit ist unabhängig von der Einstellung der Farbtemperatur, d. h., auch wenn die Farbtemperatur geändert wird, bleibt doch die Gesamtleistung der LED-Anordnungen 81, 82 gleich. Es wird lediglich die Leistung unterschiedlich auf die LED-Anordnungen 81, 82 verteilt, so dass die aktuell vorgegebene Farbtemperatur erreicht wird.

Es wird an dieser Stelle darauf hingewiesen, dass Figur 8 nur vereinfacht die für die Erfindung wesentlichen Komponenten zeigt und dass zur gesamten Steueranordnung 40 auch noch weitere Komponenten gehören können, zum Beispiel über die Schnittstellen gekoppelte weitere mobile Endgeräte oder PCs. Insbesondere kann die Steuereinrichtung 41 auch noch weitere Komponenten und Baugruppen aufweisen, wie zum Beispiel ein oder mehrere Netzteile, Spannungswandler, gegebenenfalls zusätzliche Speichereinheiten, Schnittstellen, weitere Prozessoren, Anzeigeelemente etc.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So können die Leuchtmodule beispielsweise auch anstelle oder neben den kaltweißen, warmweißen und/oder neutralweißen LEDs auch weitere beliebige farbige LEDs aufweisen, beispielsweise - aber nicht abschließend - amberfarbene, blaue, rote, gelb-rote und/oder grüne LEDs etc., um eine gewünschte Lichttemperatur bzw. Farbtemperatur insgesamt zu erzeugen. Weiterhin schließt die Verwendung der unbestimmten Artikel "ein" bzw. "eine" nicht aus, dass die betreffenden Merkmale auch mehrfach vorhanden sein können.

## Patentansprüche

1. Bedienmodul (10), verbunden mit einem Mikrocontroller (20) konfiguriert zum Ansteuern von Leuchtmodulen (51) eines Beleuchtungssystems (100), aufweisend:
- eine Abdeckscheibe (1) mit zumindest teilweise durchscheinenden Anzeigeflächen (25, 27) und Bedienflächen (23, 24, 26, 28),
- eine darunter flächig angeordnete Sensorelektronik-Schichtanordnung (2) mit
- auf einer der Abdeckscheibe (1) zugewandten Seite angeordneten Sensorelektrodenflächen (3),
- Sensorelektronikbauelementen zur Ansteuerung der Sensorelektrodenflächen (3),
- Lichtdurchbrüchen (4, 72, 73, 74, 75, 76, 77, 78, 79)
- eine auf der von der Abdeckscheibe (1) wegweisenden Seite der Sensorelektronik-Schichtanordnung (2) angeordnete Halte- und Lichtkammereinheit (5) mit Durchbrüchen (6), deren Positionen den Positionen der Lichtdurchbrüche (4, 72, 73, 74, 75, 76, 77, 78, 79) auf der Sensorelektronik-Schichtanordnung (2) entsprechen,
- eine Anzahl von auf der von der Sensorelektronik-Schichtanordnung (2) wegweisenden Seite der Lichtkammereinheit (5) angeordneten Anzeige-LEDs (8), über die durch die Lichtkammereinheit (5) hindurch die durchscheinenden Anzeigeflächen (25, 27) und Bedienflächen (23, 24, 26, 28) auf der Abdeckscheibe (1) beleuchtet werden.

2. Bedienmodul (10) nach Anspruch 1, sowie zumindest einer auf der Abdeckscheibe (1) oder in oder auf der Sensorelektronik-Schichtanordnung (2), vorzugsweise auf der der Abdeckscheibe (1) zugewandten Seite, angeordneten Antenne für eine kurzreichweitige Funkverbindung.

3. Bedienmodul (10) nach einem der Ansprüche 1 oder 2, wobei die Sensorelektronik-Schichtanordnung (2) eine unter der Abdeckscheibe (1) flächig angeordnete Sensorelektronik-Platine (2) umfasst.

4. Bedienmodul (10) nach einem der Ansprüche 1 bis 3, wobei in dem Bedienmodul (10) zusätzlich mindestens eine USB-Schnittstelle (15) integriert ist, die als Ladeschnittstelle und/oder als Datenkommunikationsschnittstelle ausgeführt ist.

5. Bedienmodul (10) nach den Ansprüchen 2 und 3, wobei auf der Sensorelektronik-platine (2) ein Mikrocontroller (12) mit einem Interface für eine Kommunikation über eine kurzreichweitige Funkverbindung einschließlich Antenne eingesetzt ist, über die eine Bedienung der Leuchtmodule (51) und eine Parametrierung der Leuchtmodule (51) über ein mobiles Endgerät und/oder einen PC erfolgen kann.

6. Beleuchtungssystem (100) mit einem Leuchtkopf (50) mit zumindest einem LED-Leuchtmodul (51), einem Bedienmodul (10) und einem zur Ausrichtung des LED-Leuchtmoduls (51) verstellbaren Gehäuse, wobei das Bedienmodul (10) gemäß einem der Ansprüche 1 bis 5 ausgebildet ist.

7. Beleuchtungssystem (100) nach Anspruch 6, mit einem Leuchtkopf (50) mit mindestens einem LED-Leuchtmodul (51), einem Bedienmodul (10) und einem zur Ausrichtung der LED-Leuchtmodule (51) verstellbaren Gehäuse mit einem mehrfach abwinkelbaren Leuchtenarm (100), wobei das Bedienmodul (10) als ein Segment des Leuchtenarms (101) ausgebildet ist und an zwei Stirnseiten (102, 103) über Gelenke (104, 105) mit benachbarten Segmenten (106, 107) gekoppelt ist, in die vorzugsweise Kabelverbindungen für das Bedienmodul (10) bzw. das LED-Leuchtmodul (51) integriert sind.

8. Beleuchtungssystem (100) nach Anspruch 7, wobei über das Bedienmodul (10) verschiedene Leuchtmodule (51) einer Leuchte betrieben werden.

9. Beleuchtungssystem (100) nach einem der Ansprüche 6 bis 8, wobei an dem Beleuchtungssystem (100), vorzugsweise an dessen Bedienmodul (10), ein Nahfeld-Kommunikations-Element oder ein Scancode angebracht ist.

10. Beleuchtungssystem (100) nach einem der Ansprüche 6 bis 9, wobei zur Parametrierung der Leuchte mittels eines mobilen Endgeräts (60) oder eines PCs auf dem mobilen Endgerät (60) oder, bei einem Beleuchtungssystem nach Anspruch 9, dem PC bei Erkennen des Nahfeld-Kommunikations-Elements durch das Endgerät (60) oder dem PC ein Anwendungsprogramm aufgerufen und ausgeführt wird.

11. Beleuchtungssystem (100) nach einem der Ansprüche 6 bis 10, wobei in oder an dem Beleuchtungssystem (100), vorzugsweise dem Bedienmodul (10), und/oder in oder an einem mobilen Endgerät (60) ein Helligkeitssensor angeordnet ist, über den die Helligkeit des zumindest einen LED-Leuchtmoduls (51) umgebungslichtabhängig geregelt wird.

12. Beleuchtungssystem (100) nach einem der Ansprüche 6 bis 11, wobei in oder an dem Beleuchtungssystem (100), vorzugsweise dem Bedienmodul (10), und/oder in oder an einem mobilen Endgerät (60) ein Bewegungs- oder Präsenzsensor angeordnet ist, wobei die Helligkeit der LED-Leuchtmodule (51) umgebungslichtabhängig in Abhängigkeit von einer Präsenz eines Benutzers geregelt wird.

13. Beleuchtungssystem (100) nach einem der Ansprüche 6 bis 12, mit einer Steuerung, die so ausgebildet ist, dass wenn ein mit dem Beleuchtungssystem (100) gekoppeltes mobiles Endgerät (60) aus dem Empfangsbereich des Beleuchtungssystems (100) entfernt wird, automatisch ein Ausschalten oder Herunterdimmen eines LED-Leuchtmoduls (51) initiiert wird.

14. Beleuchtungssystem (100) nach einem der Ansprüche 6 bis 13, wobei das Leuchtmodul (51) eine erste LED-Anordnung (81) und eine zweite LED-Anordnung (82) umfasst, wobei die erste LED-Anordnung (81) und die zweite LED-Anordnung (82) im Betrieb Licht mit unterschiedlichen Lichtspektren aussenden und wobei die Anteile des von der ersten LED-Anordnung (81) und der zweiten LED-Anordnung (82) ausgesendeten Lichts innerhalb eines Gesamtlichtspektrums der LED-Anordnungen (81, 82) gemäß einer vorgegebenen Spektrums-Steuerungsfunktion gesteuert werden.

15. Beleuchtungssystem (100) nach Anspruch 14, wobei die erste LED-Anordnung (81) und die zweite LED-Anordnung (82) zur Erzeugung von Licht mit einem vorgegeben Gesamtlichtspektrum mit einem bestimmten Stromverhältnis angesteuert werden.

## Claims

1. Control module (10), connected to a microcontroller (20) configured for controlling light modules (51) of a lighting system (100), having:
- a cover plate (1) with at least partially translucent display surfaces (25, 27) and control surfaces (23, 24, 26, 28),
- a flat sensor electronics layer arrangement (2) arranged below it, having
- sensor electrode surfaces (3) arranged on the side facing the cover plate (1),
- sensor electronics components for controlling the sensor electrode surfaces (3),
- light apertures (4, 72, 73, 74, 75, 76, 77, 78, 79),
- a retaining and light-chamber unit (5) with openings (6), which is arranged on the side of the sensor electronics layer arrangement (2) facing away from the cover plate (1), the positions of which openings (6) correspond to the positions of the light apertures (4, 72, 73, 74, 75, 76, 77, 78, 79) on the sensor electronics layer arrangement (2),
- a number of display LEDs (8) arranged on the side of the light chamber unit (5) facing away from the sensor electronics layer arrangement (2), by means of which display LEDs (8) the translucent display surfaces (25, 27) and control surfaces (23, 24, 26, 28) on the cover plate (1) are illuminated through the light chamber unit (5).

2. Control module (10) according to claim 1, and at least one antenna for a short-range radio connection arranged on the cover plate (1) or in or on the sensor electronics layer arrangement (2), preferably on the side facing the cover plate (1).

3. Control module (10) according to any one of claims 1 or 2, wherein the sensor electronics layer arrangement (2) comprises a flat sensor electronics circuit board (2) arranged under the cover plate (1).

4. Control module (10) according to any one of claims 1 to 3, wherein at least one USB interface (15) is additionally integrated in the control module (10), which USB interface (15) is designed as a charging interface and/or as a data communication interface.

5. Control module (10) according to claims 2 and 3, wherein a microcontroller (12) with an interface, which is intended for communicating via a short-range radio connection and which includes an antenna, is located on the sensor electronics circuit board (2), by means of which a control of the light modules (51) and a parameterisation of the light modules (51) can be executed via a mobile terminal and/or a PC.

6. Lighting system (100) with a light head (50) with at least one LED light module (51), a control module (10) and a housing adjustable for aligning the LED light module (51), wherein the control module (10) is designed according to any one of claims 1 to 5.

7. Lighting system (100) according to claim 6, with a light head (50) with at least one LED light module (51), a control module (10) and an adjustable housing for aligning the LED light modules (51) with a lamp arm (100) which can be adjusted at multiple angles, wherein the control module (10) is designed as a segment of the lamp arm (101) and on two end faces (102, 103) is coupled via joints (104, 105) with adjacent segments (106, 107), into which cable connections for the control module (10) or, respectively, the LED light module (51) preferably are integrated.

8. Lighting system (100) according to claim 7, wherein different light modules (51) of a lamp are operated via the control module (10).

9. Lighting system (100) according to any one of claims 6 to 8, wherein a near-field communication element or a scan code is attached to the lighting system (100), preferably to its control module (10).

10. Lighting system (100) according to any one of claims 6 to 9, wherein an application program is opened and executed by means of a mobile terminal (60) or a PC on the mobile terminal (60) or, in the case of a lighting system according to claim 9, by means of the PC when the near-field communication element is detected by the terminal device (60) or the PC.

11. Lighting system (100) according to any one of claims 6 to 10, wherein a brightness sensor is arranged in or on the lighting system (100), preferably the control module (10) and/or in or on a mobile terminal (60), via which brightness sensor the brightness of at least one LED light module (51) is regulated depending on the ambient light.

12. Lighting system (100) according to any one of claims 6 to 11, wherein a motion or presence sensor is arranged in or on the lighting system (100), preferably the control module (10) and/or in or on a mobile terminal (60), wherein the brightness of the LED light module (51) is regulated depending on the ambient light and on the presence of a user.

13. Lighting system (100) according to any one of claims 6 to 12, with a controller designed such that when a mobile terminal (60) coupled with the lighting system (100) is removed from the reception area of the lighting system (100), a deactivation or dimming of an LED light module (51) is automatically initiated.

14. Lighting system (100) according to any one of claims 6 to 13, wherein the light module (51) comprises a first LED arrangement (81) and a second LED arrangement (82), wherein the first LED arrangement (81) and the second LED arrangement (82) in operation emit light with different light spectra and wherein the proportions of the light emitted by the first LED arrangement (81) and the second LED arrangement (82) within a total light spectrum of the LED arrangements (81, 82) are controlled according to a predefined spectrum control function.

15. Lighting system (100) according to claim 14, wherein the first LED arrangement (81) and the second LED arrangement (82) are controlled with a certain electrical current ratio for generating light with a predefined total light spectrum.

## Revendications

1. Module de commande (10) relié à un microcontrôleur (20) configuré pour la commande de modules d'éclairage (51) d'un système d'éclairage (100), présentant :
- une plaque de couverture (1) avec des surfaces d'affichage au moins partiellement translucides (25, 27) et des surfaces de commande (23, 24, 26, 28),
- un agencement en couches d'électronique de détection (2) disposé en nappe de manière sous-jacente avec
- des surfaces d'électronique de détection (3) disposées sur un côté tourné vers la plaque de couverture (1),
- des composants d'électronique de détection pour la commande des surfaces d'électronique de détection (3),
- des trouées de lumière (4, 72, 73, 74, 75, 76, 77, 78, 79),
- une unité de maintien et de chambre lumineuse (5) disposée sur le côté de l'agencement en couches d'électronique de détection (2) tournant le dos à la plaque de couverture (1) avec des trouées (6) dont les positions correspondent aux positions des trouées de lumière (4, 72, 73, 74, 75, 76, 77, 78, 79) sur l'agencement en couches d'électronique de détection (2),
- un certain nombre de DEL d'affichage (8) disposées sur le côté de l'unité de chambre lumineuse (5) tournant le dos à l'agencement en couches d'électronique de détection (2) via lesquelles les surfaces d'affichage translucides (25, 27) et surfaces de commande (23, 24, 26, 28) sur la plaque de couverture (1) sont éclairées à travers l'unité de chambre lumineuse (5).

2. Module de commande (10) selon la revendication 1, ainsi qu'au moins une antenne pour une liaison radio de courte portée disposée sur la plaque de couverture (1) ou dans ou sur l'agencement en couches d'électronique de détection (2), de préférence sur le côté tourné vers la plaque de couverture (1).

3. Module de commande (10) selon l'une des revendications 1 ou 2, dans lequel l'agencement en couches d'électronique de détection (2) comprend une platine d'électronique de détection (2) disposée en nappe sous la plaque de couverture (1).

4. Module de commande (10) selon l'une des revendications 1 à 3, dans lequel, dans le module de commande (10), au moins une interface USB (15) est additionnellement intégrée, laquelle est réalisée en tant qu'interface de charge et/ou en tant qu'interface de communication de données.

5. Module de commande (10) selon les revendications 2 et 3, dans lequel, sur la platine d'électronique de détection (2), un microcontrôleur (12) est mis en place avec une interface pour une communication via une liaison radio de courte portée, y compris une antenne via laquelle il peut y avoir une commande des modules d'éclairage (51) et un paramétrage des modules d'éclairage (51) via un appareil terminal mobile et/ou un PC.

6. Système d'éclairage (100) avec une tête d'éclairage (50) avec au moins un module d'éclairage à DEL (51), un module de commande (10) et un boîtier réglable pour l'orientation du module d'éclairage à DEL (51), dans lequel le module de commande (10) est réalisé selon l'une des revendications 1 à 5.

7. Système d'éclairage (100) selon la revendication 6, avec une tête d'éclairage (50) avec au moins un module d'éclairage à DEL (51), un module de commande (10) et un boîtier réglable pour l'orientation des modules d'éclairage à DEL (51) avec un bras de luminaire (100) pouvant être plié plusieurs fois, dans lequel le module de commande (10) est réalisé en tant qu'un segment du bras de luminaire (101) et est accouplé au niveau de deux côtés frontaux (102, 103) via des articulation (104, 105) à des segments (106, 107) voisins dans lesquels des raccordements de câblage pour le module de commande (10) ou le module d'éclairage à DEL (51) sont de préférence intégrés.

8. Système d'éclairage (100) selon la revendication 7, dans lequel on fait fonctionner via le module de commande (10) différents modules d'éclairage (51) d'un luminaire.

9. Système d'éclairage (100) selon l'une des revendications 6 à 8, dans lequel, sur le système d'éclairage (100), de préférence au niveau du module de commande (10) de celui-ci, un élément de communication en champ proche ou un scancode est monté.

10. Système d'éclairage (100) selon l'une des revendications 6 à 9, dans lequel, pour le paramétrage du luminaire au moyen d'un appareil terminal mobile (60) ou d'un PC, sur l'appareil terminal mobile (60) ou, en cas d'un système d'éclairage selon la revendication 9, le PC, en cas de reconnaissance de l'élément de communication en champ proche par l'appareil terminal (60) ou le PC, un programme applicatif est appelé et exécuté.

11. Système d'éclairage (100) selon l'une des revendications 6 à 10, dans lequel dans ou sur le système d'éclairage (100), de préférence le module de commande (10), et/ou dans ou sur un appareil terminal mobile (60), un capteur de luminosité est disposé via lequel la luminosité de l'au moins un module d'éclairage à DEL (51) est réglée en fonction de la lumière ambiante.

12. Système d'éclairage (100) selon l'une des revendications 6 à 11, dans lequel dans ou sur le système d'éclairage (100), de préférence le module de commande (10), et/ou dans ou sur un appareil terminal mobile (60), un capteur de mouvement ou de présence est disposé, dans lequel la luminosité des modules d'éclairage à DEL (51) est réglée selon la lumière ambiante en fonction d'une présence d'un utilisateur.

13. Système d'éclairage (100) selon l'une des revendications 6 à 12, avec une commande qui est réalisée de telle sorte que, lorsqu'un appareil terminal mobile (60) couplé au système d'éclairage (100) est enlevé de la zone de réception du système d'éclairage (100), automatiquement une extinction ou un abaissement de l'intensité lumineuse d'un module d'éclairage à LED (51) est initié.

14. Système d'éclairage (100) selon l'une des revendications 6 à 13, dans lequel le module d'éclairage (51) comprend un premier agencement à DEL (81) et un deuxième agencement à DEL (82), dans lequel, lors du fonctionnement, le premier agencement à DEL (81) et le deuxième agencement à DEL (82) émettent de la lumière avec des spectres de lumière différents et dans lequel les fractions de la lumière émises par le premier agencement à DEL (81) et le deuxième agencement à DEL (82) sont commandées au sein d'un spectre de lumière global des agencements à DEL (81, 82) conformément à une fonction de régulation de spectre prescrite.

15. Système d'éclairage (100) selon la revendication 14, dans lequel le premier agencement à DEL (81) et le deuxième agencement à DEL (82) sont commandés avec spectre de lumière global prescrit avec un rapport de courant défini.
